# EUROPÄISCHE PATENTSCHRIFT

(11) **EP 1 580 231 B1**
(45) Veröffentlichungstag und Bekanntmachung des Hinweises auf die Patenterteilung: **31.10.2007**
(21) Anmeldenummer: 05006510.1
(22) Anmeldetag: 24.03.2005
(51) Int. Cl.: C08L 23/12, C08L 1/00

(54) **Polypropylen-Verbunde**
Polypropylene composites
Composites de polypropylène

(30) Priorität: 26.03.2004 DE 102004016163
(43) Veröffentlichungstag der Anmeldung: 28.09.2005
(73) Patentinhaber: Kometra Kunststoff-Modifikatoren und Additiv GmbH, 06429 Neugattersleben (DE)
(72) Erfinder: Gerecke, Jochen, Dr.-Dipl.-Chem., 06122 Halle (DE); Rapthel, Inno, Dr. Dipl.-Chem., 06120 Halle (DE); Häussler, Lutz, Dr. Dipl.-Chem., 06108 Halle (DE); Besser, Klaus-Dieter, Dipl.-Chem., 04158 Leipzig (DE)
(74) Vertreter: Voigt, Wolf-Rüdiger

(56) Entgegenhaltungen:
- EP-A- 1 026 197
- DE-A1- 10 123 825
- DE-A1- 19 914 146
- JP-A- 59 217 744
- US-A- 5 288 772

## Beschreibung

Die Erfindung betrifft holzgefüllte und/oder mit anderen cellulosehaltigen Naturstoffen verstärkte Polypropylen-Verbunde mit verbesserten mechanischen Eigenschaften sowie verringerter Wasseraufnahme, die als Haftvermittler ein funktionalisiertes Propylenhomo- oder -copolymer mit einem Carboxylierungsgrad zwischen 0,1 und 5 Masse-% enthalten.

Zwecks Verbesserung der Rezyklier- bzw. Entsorgbarkeit von faserverstärkten und/oder hochgefüllten thermoplastischen Werkstoffen werden die anorganischen Füll- bzw. Verstärkungsmaterialien in zunehmendem Maße durch cellulosische Naturfasern wie Holz- und anderen pflanzlichen Fasern und/oder Holzmehl bzw. anderen in unterschiedlicher Form vorliegenden cellulosehaltigen Naturstoffen, einschließlich Abfallprodukten, substituiert, wobei gleichzeitig eine Gewichtsreduzierung der mittels üblicher Thermoformverfahren herzustellenden Halbzeuge und Fertigteile erreicht wird.

Auf Grund ihrer gesundheitlichen Unbedenklichkeit und Umweltfreundlichkeit werden pflanzliche Einsatzmaterialien, die als nachwachsende Rohstoffe nahezu unbegrenzt und dabei äußerst preiswert verfügbar sind, in Kunststoff-Formmassen eingesetzt. Dabei ist weiterhin von Bedeutung, dass sie bei ihrer Verarbeitung im Unterschied zu Glasfasern und anderen anorganischen Füllstoffen/Fasermaterialien deutlich weniger abrasiv sind sowie nach Beendigung ihrer Nutzung leichter unter Wärmegewinnung verbrannt bzw. wesentlich einfacher auf andere Weise entsorgt werden können.

Mittels cellulosehaltigen Naturprodukten verstärkte olefinische Kunststoffe, vor allem holzmehlgefüllte und/oder naturfaserverstärkte Polypropylene, haben besonders in Anwendungsbereichen im Kraftfahrzeuginterieur, wie z. B. Tür- und Fondverkleidungen sowie Sitzschalen und Hutablagen, Eingang gefunden.

Eine wichtige technische Aufgabe bei der Verarbeitung von Olefinpolymer-Verbunden besteht darin, die Verträglichkeit zwischen dem olefinischen Polymer, wie z. B. Polypropylen, und dem cellulosischen Verstärkungsmittel zu verbessern.

Zur Verbesserung der Haftung zwischen cellulosischem Material in unterschiedlicher partikulärer Form (Mehle, Späne usw.) oder besonders als Fasern und Polypropylen-Matrix werden entweder mit Malein- oder Phthalsäureanhydrid vorbehandelte ("getränkte") Naturfasern verwendet oder auch die üblicher Weise besonders für die Glasfaserverstärkung von Polypropylen verwendeten funktionalisierten, insbesondere maleinierten Polypropylene als Haftvermittler zwischen cellulosehaltigem Material und Polymermatrix eingesetzt (EP 0201367 B1, US 5.120.776, WO 02/083824 A1, WO 02/064670 A1).

Am bekanntesten sind carboxylierte Polypropylene, erhalten durch "Aufpfropfen" ungesättigter Mono- und Dicarbonsäuren bzw. ihrer Anhydride (Carboxylmonomere), insbesondere MSA, auf ein Polypropylen-Rückgrat.

Die Carboxylierung/Maleinierung durch reaktive Extrusion einer Mischung aus geschmolzenem Polypropylen, Carboxylmonomer, einem radikalbildenden Initiator und gegebenenfalls weiteren Rezepturbestandteilen, wie speziellen Comonomeren, Cokatalysatoren oder Stabilisatoren, ist die am häufigsten angewandte Pfropftechnologie (DE 2242324, DE 2326589; US 2 455 594; US 3 177 269, US 3 987 122).

Es ist bekannt, schmelzemodifiziertes Polypropylen im Allgemeinen im Extruder mittels Pfropfung von Maleinsaure(anhydrid) oder (Meth)Acrylsaure oder ihren höhermolekulareren Homologen hergestelltes carboxyliertes Polypropylen als Haftvermittler (Kompatibilisator) - zusammen mit einem Anteil eines anorganischen blättchenförmigen Füllstoffs wie Talk oder Glimmer und einem olefinischen Elastomer wie Ethylen/Propylen-Kautschuk (EPM) - in Holzmehl gefülten Kunststoff-Composites, die eine verbesserte Schlagfestigkeit aufweisen, einzusetzen (JP 59217744 A).

Auch aus einem thermoplastischen Kunststoff wie Polypropylen und einem Cellulosematerial, vorzugsweise Papier wie Zeitungsabfälle mit mindestens einer Wasserfeuchte von 30 Gew:-%, bestehenden Verbunden, denen zusätzlich Lignin zugegeben wird, kann zwecks Verbesserung der Kompatibilität zwischen den Komponenten ein modifiziertes Polypropylen wie z.B schmelzemaleiniertes Polypropylen der Poybond 3000-Typenreihe hinzugesetzt werden (US 5.288.772).

Analog zur Kompatibilisierung von aus olefinischen Kunststoffen und anorganischen Füllstofen bzw. Verstärkungsmitteln bestehenden Composites mittels modifizierten Olefinwaschsen mit gewichtsmittleren Molmassen M_{w}< 30.000g/mol ist die Verwendung besonders von maleinierten Polypropylenwachsen mit M_{w}<20.000 und insbesondere M_{w}<17.000 g/mol sowie hohen Säurezahlen (mindestens 20 mg KOH/g, denen Maleinierungsgrade von ≥ 2 Masse % aufgepfropftes MSA entsprechen) als Haftvermittler in Polypropylen/Holz-Verbunden für die Herstellung von bindungsfähigem (adhäsivem) Plattenmaterial bekannt (EP 1026197 A1). Auf Grund der niedrigen Molmasse des carboxylierten PP ist der erhaltene Anstieg der mechanischen Kennwerte aber gering.

Nachteile der Carboxylierung/Maleinierung in der Polypropylen-Schmelze sind der niedrige Funktionalisierungsgrad sowie die bei den hohen Reaktionstemperaturen von etwa 160 bis etwa 250 °C auftretenden toxischen Monomer-, insbesondere MSA-Dämpfe.

Als besonders nachteilig bei der zumeist angewandten Maleinierung sind die hohen MSA-Restgehalte auf Grund des geringen Umsatzgrades, weshalb die Einsatz- und Anwendungsmöglichkeiten als Haftvermittler eingeschränkt sind.

Eine Alternative zur Schmelze-Funktionalisierung ist die Funktionalisierung in fester Polypropylen-Phase (solid state grafting), dadurch charakterisiert, dass Carboxylmonomermoleküle an Radikalstellen der Polymerkette des in fest-fluider, insbesonere pulveriger, körniger, flockiger, blättchenförmiger, granularer oder anderer partikulärer Form vorliegenden Polypropylens bei Temperaturen unterhalb seines Schmelzpunktes, zwischen 60 und 160 °C, "angekoppelt" werden (US 3 414 551, DD 275159 A3, DD 275160 A3, DD 275161 A3, EP 0519341 B1, WO 00/58379, WO 02/093157 A2).

Der Vorteil der Modifizierung in fester Phase liegt gegenüber der Schmeizemodifizierung in der Vermeidung bzw. starken Zurückdrängung des Auftretens toxischer MSA- oder anderer Carboxylmonomer-Dämpfe und weiterer flüchtiger Einsatz und Einsatz und Reaktionsprodukte sowie auf Grund der niedrigeren Reaktionstemperatur in der geringeren thermischen Belastung der Polypropylen-Rückgrate und dem dadurch geringeren bzw. gezielt gesteuerten Polypropylen-Abbau.

Bekannt, ist, in fester Phase bei Pfropfpolymerisationstemperaturen zwischen 125 und 160°C maleinierte Polypropylene mit gewichtsmittleren Molmassen M_{w} > 50.000 g/mol entweder mittels Chargentechnologie (DE 101 23 825 A1) oder Kontinuierlicher Fahrweise (DE,199 14 146 A1) herzustellen die - ohne jeglichen Hinweis auf PP-Verbunde mit Cellulosematerialen wie Holz - in PP-Composites mit anorganischen Füll- und Verstärkungsstoffen insbesondere in PP/Glasfaser Systemen, verbesserte mechanische Eigenschaften sichern.

Die bekannten aus den zwei Hauptkomponenten Polypropylen (PP), insbesondere Propylenhomopolymer (HPP) oder statistischem bzw. heterophasigem Propylencopolymer (RCP, HCP), und cellulosischem Naturstoff, der die breite Palette von den bekannten Hartholz- und Weichholzmehlen bzw. -spänen über Bambushäcksel bis hin zu Hanf-, Flachs-, Sisal- und anderen Fasern sowie unterschiedlichsten pflanzlichen Abfallprodukten umfasst, bestehenden thermoplastisch verarbeitbaren Verbunde (Composites) benötigen im Allgemeinen einen Haftvermittler, zumeist ein carboxyliertes Olefinpolymer, vorzugsweise ein maleiniertes PP.

Die vorliegende Erfindung betrifft daher die Aufgabe, im Wesentlichen aus PP und Holz(mehl) und/oder anderen Naturstoffkomponenten in partikulärer und/oder faseriger Form bestehende Verbunde, die mit einem Haftvermittler auf Basis carboxylierter/maleinierter Polypropylene ausgerüstet sind, der Zusammensetzung
A) 8 bis 89,8 Masse-% Propylenhomo- oder-copolymerisat (PP),
B) 10 bis 91,8 Masse-% cellulosehaltigem Naturprodukt in partikulärer und/order faseriger Form,
C) 0,2 bis 10 Masse % Haftvermittler auf Basis eines bestimmten carboxylierten Polypropylens und
D) 0 bis 40 Masse-% Additive aus der Reihe der Schlagzähmodifikatoren für PP, Stabilisatoren, Antioxydantien und anderer für die Verarbeitung sowie Anwendung üblicher Hilfsstoffe,
die sowohl ein insgesamt höheres mechanisches Kennwertniveau als auch eine geringere Wasseraufnahme im Vergleich zu bekannten PP/Naturstoff-Composites besitzen, zu entwickeln.

Vorzugsweise bestehen die Verbunde aus
A) 15 bis 79,4 Masse-% Propylenhomo- oder -copolymerisat (PP)
B) 20 bis 84,4 Masse-% cellulosehaltigem Naturprodukt in partikulärer und/oder faseriger Form
C) 0,5 bis 5 Masse-% Haftvermittler auf Basis eines bestimmten carboxylierten Polypropylens, erhältlich durch Festphasenpfropfung von PP mit Maleinsäureanhydrid (MSA) oder MSA-haltigen Monomermischungen
D) 0,1 bis 30 Masse-% Additive aus der Reihe der Schlagzähmodifikatoren für PP, Stabilisatoren, Antioxydanzien und anderer für die Verarbeitung sowie Anwendung üblicher Hilfsstoffe.

Die Aufgabe wird dadurch gelöst, dass als Haftvermittler C) ein durch Festphasenpfropfung (solid state grafting) von Propylenhomo-und/oder-copolymeren (PP) mit einer α,β-ungesättigten Mono-oder Dicarbonsäure und/oder deren Anhydrid (Carboxylmonomer) oder mit einer Carboxylmonomermischung oder mit einer mindestens ein Carboxylmonomer enthaltenden Monomermischung bein Reaktionstemperaturen zwischen 100°C und der PP-Schmelztemperatur unter Aufrechterhaltung der fest-fluiden Konsistenz des Reaktionssystems und Verwendung eines frele Radikale bildenden peroxidischen Initiators hergestelltes carboxyliertes PP eingesetzt werden ist.

Als Formmassenbestandteil A) - gleichfalls als Rückgratpolymer zur Herstellung des Haftvermittlers C) - werden Polypropylene (PP), insbesondere Homopolymere des Propylens (HPP) und/oder statistische (Random)Copolymere des Propylens mit 0,1 bis 8 Masse-% einpolymerisierten Ethylen- und/oder C₄- bis C₁₂-Olefineinheiten (RCP) und/oder heterophasige Propylencopolymere mit 6 bis 50 Masse-% einpolymerisierten Ethylen- und/oder C₄- bis C₁₂- Olefineinheiten (HCP) verwendet. Die als Formmassenbestandteil A) sowie als Rückgratpolymere für den Haftvermittler verwendbaren Polypropylene (PP) besitzen gewichtsmittlere Molekulargewichte M_{w} zwischen 50000 und 2000000 g/mol, vorzugsweise zwischen 100000 und 1000000 g/mol, und Schmelzflussraten MFR (230 °C/2,16 kg) zwischen 0,05 und 500 g/10 min, vorzugsweise zwischen 0,1 und 200 g/10 min (nach ISO 1133).

Als Formmassenbestandteil B) können cellulosehaltige Naturprodukte in partikulärer und/oder faseriger Form aus Holz in Form von Mehl, Spänen, Fasern, Granulat oder anderer Form oder aufbereitet als Cellulose verwendet werden.

Als Komponente B) können auch cellulosehaltige Naturprodukte auf Basis von Naturfasern, wie Hanf, Flachs, Jute, Sisal, Ramie, Ananas (Curaua), Kenaf oder Reißbaumwolle und anderer cellulosischer Fasermaterialien, landwirtschaftlicher Nebenprodukte, wie Stroh, Getreideschrot und Flachsschäben usw., Schilf, Bambus und dergleichen verwendet werden.

Besonders bevorzugte Komponente B) ist Holz in Form von Mehl und/oder Spänen und/oder Granulat sowie cellulosisches Fasermaterial auf Basis von Hanf, Flachs, Jute, Sisal, Ramie und Bambus.

Als Formmassenbestandteil D) können sowohl die für Olefinpolymere bekannten Stabilisatoren/Antioxydantien und die für die Verarbeitung und Anwendung üblichen Hilfsstoffe sowie auf Grund der für hochgefüllte Composites beobachteten hohen Sprödigkeit besonders die für PP-Formmassen bekannten Schlagzähmodifikatoren unterschiedlicher Zusammensetzung eingesetzt werden.

Als Schlagzähmodifikatoren D) können ein Polyolefinelastomer aus der Reihe der Ethylen/C₃- bis C₈₋Alkyfenl(Dien)-Copolymere und/oder funktionalisierten Ethylen/C₃-bis C₈-Alkylenl(Dien)-Copolymere und/oder ein Elastomer aus der Reihe der Styrol- (hydrierte)Dien-Blockcopolymere und/oder funktionalisierten Styrol-(hydrierte)Dien-Blockcopolymere eingesetzt werden.

Sehr wirksame Schlagzähmodifikatoren D) sind aus der Reihe der Ethylen/C₃- bis C₈-Alkylenl(Dien)-Copolymere besonders Ethylen/Octen-Copolymere (POE) und maleinierte Ethylen/Octen-Copolymere und aus der Reihe der Styrol-(hydrierte)Dien-Blockcopolymer-Elastomere besonders Styrol/Ethen-Buten/Styrol-Dreiblockcopolymere (SEBS), Styrol/Ethen-(Ethen)-Propen/Styrol-Dreiblockcopolymere (SE(E)PS) sowie maleinierte SEBS und maleinierte SE(E)PS.

Besonders geeignet dabei ist als Schlagzähmodifikator D) ein Ethylen/Octen-Copolymer oder ein maleiniertes Ethylen/Octen-Copolymer bzw. eine Mischung aus nicht funktionalisiertem und maleiniertem Ethylen/Octen-Copolymer.

Die für die erfindungsgemäßen PP/Naturstoff-Verbunde einsetzbaren Haftvermittler C) werden bei Reaktionstemperaturen zwischen 100 °C und der PP-Schmelztemperatur, vorzugsweise zwischen 125 und 155 °C, unter Aufrechterhaltung der fest-fluiden Konsistenz des PP-Rückgratpolymers und Verwendung eines freie Radikale bildenden peroxidischen Initiators hergestellt.

Nach diesem in der DE 101 23 825 A1 beschriebenen Verfahren der Festphasenpfropfung werden carboxylierte, insbesondere maleinierte Polypropylene mit einem Maleinierungsgrad zwischen 0,1 und 5 Masse-% erhalten.

Eine bevorzugte Herstellungsweise der Festphasenpfropfung erfolgt derart, dass
a) eine Reaktionsmischung, bestehend aus
   - 75 bis 99,4 Masse-% partikelförmigem PP mit mittleren Teilchendurchmessem zwischen 0,01 und 8 mm,
   - 0,5 bis 15,5 Masse-% Carboxylmonomer, vorzugsweise MSA oder gegebenenfalls Mischungen aus MSA und einem zweiten carboxylgruppenhaltigen Comonomer und/oder einem carboxyl- und/oder anhydridgruppenfreien Comonomer entsprechend einer Zusammensetzung 20 bis 95 Masseteile MSA/5 bis 80 Masseteile Comonomer, und
   - 0,1 bis 9,5 Masse-% eines organischen peroxidischen Radikalbildners, wobei das Masseverhältnis Carboxylmonomer/Radikalbildner zwischen 0,2 und 20 beträgt,
   bei einer Dispergiertemperatur (T_{D}) im Bereich zwischen Raumtemperatur und 120 °C und einer Dispergierzeit (t_{D}) zwischen 1 und 60 min hergestellt,
b) die Mischung innerhalb einer Aufheizperiode zwischen 5 und 120 min von der Dispergiertemperatur T_{D} auf eine Reaktionstemperatur T_{R} zwischen 100 °C und der PP-Schmelztemperatur, vorzugsweise zwischen 125 und 155 °C, erwärmt,
c) das Carboxylmonomer(gemisch) oder Carboxylmonomer/Comonomer-Gemisch, vorzugsweise MSA oder das MSA-Comonomer-Gemisch, bei T_{R} innerhalb einer Reaktionszeit t_{R} zwischen 5 und 180 min unter Aufrechterhaltung einer fest-fluiden Konsistenz der Reaktionsmischung umgesetzt
   und danach
d) aus der Reaktionsmischung mittels Durchleiten von Stickstoff über eine Desorptionszeit t_{Des} zwischen 10 und 240 min bei einer Desorptionstemperatur T_{Des} zwischen T_{R} und 80 °C der nicht umgesetzte Monomeranteil entfernt, der Restinitiator deaktiviert und nach Abkühlung auf eine Endtemperatur unterhalb 100 °C das trockene funktionalisierte Polypropylen dem Reaktionsgefäß entnommen wird.

Das Funktionalisierungsagens bzw. -agensgemisch, ausgewählt unter MSA und/oder Acrylsäure (AS) und/oder anderen ungesättigten Monocarbon- oder Dicarbonsäuren bzw. deren Anhydriden, wird bei der Pfropfung auf das PP-Rückgrat entweder in Form eines einzelnen Carboxylmonomers oder eines Carboxylmonomergemisches ohne weiteren Zusatz eines carboxylgruppen-/anhydridgruppenfreien Comonomers oder für verschiedene PP/Naturstoff-Verbunde vorteilhaft mit einem Zusatz eines carboxylgruppen-/anhydridgruppenfreien Comonomers in Zusammensetzungen zwischen 30-90 Masse-% Carboxylmonomer(gemisch), insbesondere MSA, und 10-70 Masse-% Comonomer, zur Einstellung spezieller Modifikatoreigenschaften eingesetzt. Als carboxylgruppen-/anhydridgruppenfreie Comonomere sind unpolare Vinyl-a-romate, insbesondere Styrol und α-Methylstyrol, sowie Ester der Acryl- oder Methacrylsäure, insbesondere Ethyl- und n-Butylacrylat oder Methylmethacrylat (MMA), bevorzugt.

Die radikalisch initiierte Funktionalisierungsreaktion wird zwecks Sicherung ausreichender Carboxylierungs-/Maleinierungsgrade sowie einer gleichmäßigen Pfropfung vorteilhaft in Gegenwart eines organischen peroxygruppenhaltigen Radikalbildners mit einer Halbwertstemperatur nach einer Stunde T _{HW/1h} (gemessen als 0,2-molare Lösung in Benzol) zwischen 70 und 200 °C - entsprechend Halbwertszeiten zwischen 3 und 120 min im Temperaturbereich von 125 bis 160 °C - durchgeführt.

Ausgewählte Beispiele dafür sind Dibenzoylperoxid (DBPO) mit T_{HW/1h} von 91 °C, tert.- Butylperoxy-2-ethylhexanoat (TBPEH) mit T_{HW/1h} von 91 °C, tert.-Butylperoxy-isobutyrat (TBPIB) mit T_{HW/1h} von 98 °C, 1,1-Di-(tert.-butylperoxy)cyclohexan (DTBPC) mit T_{HW/1h} von 113 °C, tert.-Butylperoxybenzoat (TBPB) mit T_{HW/1h} von 122 °C, Dicumylperoxid (DCP) mit T_{HW/1h} von 132 °C, 2,5-Dimethyl-2,5-di(tert.-butylperoxy)hexan (DHBP) mit T_{HW/1h} von 134 °C, Di(tert.-butyl)peroxid (DtBP) mit T_{HW/1h} von 141 °C, 2,5-Dimethyl-2,5-di(tert.-butylperoxy)hexin-(3) (DYBP) mit T_{HW/1h} von 141 °C und Cumolhydroperoxid (CHP) mit T_{HW/1h} von 166 °C.

Die Angaben zur Polymerisationsmischung von 0,5 bis 15,5 Masse-% Carboxylmonomer, vorzugsweise MSA, und 0,1 bis 9,5 Masse-% Radikalbildner unterliegen noch der zusätzlichen Bedingung bezüglich des einzusetzenden Monomer/Radikalbildner-Masseverhältnisses, das zwischen 1 und 100, vorzugsweise zwischen 2 und 50, zu wählen ist.

Der konkrete Einsatz des peroxidischen Radikalbildners, d. h. die Wahl in Bezug auf seine chemische Struktur (auch unter Berücksichtigung möglicher Zerfallsprodukte sowie toxischer und Geruchsbelästigung), Halbwertszeiten und Konzentration, wird mit den jeweils aktuellen Reaktionsbedingungen, insbesondere T_{R}, t_{R}, Carboxylmonomerkonzentration, Form der Monomer-Zugabe (batch- oder semibatch-Fahrweise), möglicher Zusätze an Comonomeren sowie Additiven, insbesondere Wärme-, Licht- und UV-Stabilisatoren, Antioxidanzien usw., abgestimmt.

Der Vorteil der erfindungsgemäß eingesetzten carboxylierten Propylenhomo- und -copolymere resultiert aus der Kombination aus hoher Funktionalität/Carboxylierungsgrad und "angepasstem Schmelzindex, die sich bei ihrer Verwendung als Haftvermittler in verbesserten mechanischen Kennwerten der mit ihnen modifizierten PP/Naturstoff-Verbunde, insbesondere in ihren hohen Zugfestigkeiten und Elastizitätsmoduln sowie auch - besonders bei Einsatz der Schlagzähmodifikatoren entsprechend dem Formmassenbestandteil D) - in hohen Schlag- und Kerbschlagzähigkeiten, widerspiegeln.

Dieses hohe Eigenschaftsniveau basiert auf der gezielt einstellbaren Polypropylen-Schmelzeviskosität (Schmelzindex) und zum anderen auf der effektiven "Pfropf"-Struktur der erhaltenen carboxylierten Polypropylene, charakterisiert durch eine sehr gleichmäßige Verteilung von an der Polypropylen-Stammkette angehängten ("aufgepfropften") Carboxylmonomermolekülen bzw. -molekülketten (Pfropfreiser), bei der bevorzugten Verwendung von MSA als Carboxylmonomer insbesondere monomolekularen Bernsteisäureanhydrid (BSA)- und MSA-Gruppen bzw. - mittels spezifisch gewählter Comonomer-Konzentrationen - gezielt einstellbaren BSA/Comonomer-Seitenketten (Spacer).

Die erfindungsgemäßen PP/Naturstoff-Verbunde, einschließlich Herstellung der als Haftvermittler verwendeten funktionalisierten Polypropylene, werden durch nachfolgende Beispiele erläutert, ohne darauf beschränkt zu sein.

### Beispiele

### Herstellung der erfindungsgemäßen Haftvermittler

Die verwendeten erfindungsgemäßen carboxylierten Polypropylene, hergestellt nach dem in der DE 101 23 825 A1 beschriebenen Verfahren, sind in der Tabelle 1 aufgeführt.

Als Festphasenpfropfreaktor ist ein temperierbarer und mit einem Rührer ausgerüsteter vertikaler Pulvermischer (Länge/Durchmesser-Verhältnis: 2,5 zu 1) verwendet worden. Im Reaktor werden 100 Masseteile poröses HPP mit einem mittleren Teilchendurchmesser (dₖ) von 0,5 mm, MFR (230 °C/2,16 kg) von 15 g/10 min und einem Schmelzpunkt von 160 °C vorgelegt. Anschließend werden 1,8 Masseteile Dicumylperoxid (DCP) hinzugefügt und der Reaktor mittels Stickstoff sauerstofffrei gespült.

Nach 20-minütiger Dispergierung bei 60 °C unter Stickstoff-Atmosphäre werden dem Reaktor 3,1 Masseteile MSA und 1,55 Masseteile Styrol hinzugefügt und der Reaktor mit einer Aufheizgeschwindigkeit von 1,9 °C/min auf T_{R} = 146 °C erhitzt.
Danach wird die Reaktionsmischung unter Konstanthaltung der Reaktionstemperatur T_{R} von 146 °C gerührt (Drehzahl: 800 Umdrehungen/min).

Nach 65 min wird die Reaktion beendet, indem 40 Volumenanteile Stickstoff pro Reaktor-Volumenanteil und Stunde durch das Reaktionsprodukt geleitet werden.
Nach einer Desorptionszeit t_{Des} von 105 min ist das Reaktionsprodukt auf 121 °C heruntergekühlt. Nach weiterer Abkühlung auf unterhalb 100 °C wird das Pfropfprodukt dem Vorratsbehälter zugeführt, woraus es zur nachfolgenden Kennwertbestimmung entnommen wird.

Ermittelt werden:
- Gehalt an Carbonsäure mittels Rücktitration der durch den Carbonsäureanteil nicht neutralisierten Kalilauge, indem eine 2 g-Produktprobe der Auswage sechs Stunden mit einer Mischung aus 100 ml wasser-gesättigtem Xylol und 20 ml 0,1-molarer methanolischer KOH bei 80 °C behandelt und nach Zugabe einiger Tropfen einer 1%-igen methanolischen Phenolphthalein-Lösung mit 0,1-molarer HCl titriert wird:
   - für die (getrocknete) Auswage den Masseanteil CS in Masse-%
   - für den im siedenden Methanol erhaltenen Rückstand, d. h. den vom Polypropylen-Rückgrat chemisch gebundenen ("gepfropften") MSA-Masseanteil CS_{ex,} der sogenannte Funktionalisierungs- bzw. Maleinierungsgrad, in Masse-%
   - aus dem Extrakt der ermittelte Masseanteil an "ungebundenem" Carboxylmonomer (MSA) in Form eines oligomeren MSA-Peroxid-Reaktionsproduktes PMSAₑₓ sowie
- Schmelzflussrate (MFR) nach ISO 1133 (190 °C und 2,16 kg Auflagegewicht)

Kennwerte für das maleinierte Polypropylen (Beispiel-Nr. 1):

| | |
|---|---|
| Auswage | 105,5 Masseteile |
| Carbonsäuregehalt CS | 1,43 Masse-% |
| Maleinierungsgrad CSₑₓ | 1,11 Masse-% |
| PMSAₑₓ-Anteil | 0,22 Masse-% |
| MFR (190/2,16) | 92 g/10 min |

Unter Verwendung nachfolgender PP-Rückgratpolymere
- in o. a. Beispiel 1 eingesetztes pulverförmiges HPP mit MFR(230/2,16)=15 g/10 min bzw. MFR(190/5)=24 g/10 min (HPP-15) und
- pulverförmiges HCP (12 Masse-% eingebaute Ethyleneinheiten) mit dₖ von 0,3mm und MFR(230/2,16)=18 g/10 min (HCP 18)
sowie als Pfropfmonomere (Angabe in Masse-%, bezogen auf vorgelegtes PP)
- Carboxylmonomere: MSA und AS
- carboxylgruppen-/anhydridgruppenfreie Monomere: Styrol (S) und MMA
als peroxidische Radikalbildner (Angabe in Masse-%, bezogen auf vorgelegtes PP):
- Dicumylperoxid (DCP)
- 2,5-Dimethyl-2,5-di(tert.-butylperoxy)hexan (DHBP) und
- 2,5-Dimethyl-2,5-di(tert.-butylperoxy)hexin-(3) (DYBP)
sind gemäß den in Tabelle 1 aufgeführten Pfropf-Rezeptur-/Prozessparametern:
- unter den Beispiel-Nummern (Bsp.-Nr.) das verwendete PP-Rückgrat (Spalte 1)
- Peroxidart und -konzentration in Masse-% (Spalte 2)
- Carboxylmonomer (MSA, AS)-Konzentration in Masse-% (Spalte 3)
- Styrol (S)-Konzentration in Masse-% (Spalte 4)
- Reaktionstemperatur (T_{R}) in °C und Reaktionszeit (t_{R}) in min (Spalten 5 und 6)
acht verschiedene Haftvermittler mit den für ihre Bewertung als Haftvermittler in PP/Naturstoff-Verbunden wichtigen Kennwerten:
- MFR (190 °C/2,16 kg) in g/10 min (Spalte 7)
- chemisch gebundener ("gepfropfter") MSA-Anteil CSₑₓ in Masse-% (Spalte 8) hergestellt worden.

Für die einzelnen o. a. Prozessstufen a) bis d) zur Herstellung der erfindungsgemäß verwendeten Haftvermittler sind folgende Temperaturen und Zeiten gewählt worden:
a) 20 min Dispergierung der Reaktionsmischung bei T_{D}= (60±20) °C
b) Aufheizung von T_{D}= (60±20) °C in t_{A}=(30±10) min auf T_{R}
c) Chargen-Fahrweise bei T_{R}= (145±10) °C; Ausnahme Beispiel 7 (gleiche Monomer- und Initiatormenge einmal nachdosiert)
d) Beendigung der Desorption (Einstellung des Durchleitens von N₂ durch das Produkt) nach t_{Des}=(100±20) min bei T_{R} von (120±30) °C.

Zum Vergleich sind in Tabelle 1 zwei schmelze-funktionalisierte Polypropylene (Vgl.1A, VgI.6A), maleiniert mittels reaktiver Extrusion bei T_{R} von 185 °C bzw. 180 °C unter Verwendung der gleichen Reaktionskomponenten (PP-Rückgratpolymere: HPP-15 und HCP-18; Carboxylmonomer: MSA; Radikalbildner: DEHP) mit angeführt.

**Tabelle 1**

| Bsp.-Nr. PP-Rückgrat | Initiator [Ma.-%] | Carboxyl-monomer | S/MMA [Ma.-%] | T_{R} [°C] | t_{R} [min] | MFR 190/2,16 [g/10 min] | [CSₑₓ] [Ma.-%] |
|---|---|---|---|---|---|---|---|
| 1 | 1,8 DCP | 3,1 MSA | 1,55 S | 146 | 65 | 92 | 1,11 |
| HPP-15 | | | | | | | |
| Vgl.1A | 0,5 DHEP | 2,1 MSA | | 185 | | 140 | 0,68 |
| HPP-15 | | | | | | | |
| 2 | 4 DCP | 3,1 MSA | 1,55 S | 152 | 60 | 165 | 1,27 |
| HPP-15 | | | | | | | |
| 3 | 1,2 DHEP | 3,1 MSA | 2,2 S | 144 | 50 | 99 | 1,60 |
| HPP-15 | | 0,3 AS | | | | | |
| 4 | 0,5 DHEP | 3,1 MSA | 1,55 S | 148 | 60 | 110 | 1,31 |
| HPP-15 | | 0,3 AS | | | | | |
| 5 | 0,57 | 3,1 MSA | 1,55 S | 146 | 60 | 56 | 1,57 |
| HPP-15 | DHEP | 0,3 AS | | | | | |
| 6 | 0,5 DHEP | 3,1 MSA | 0,9 S | 148 | 50 | 70 | 1,72 |
| HCP-18 | | | | | | | |
| Vgl.6A | 0,2 DHEP | 2,1 MSA | - | 180 | | 175 | 0,74 |
| HCP-18 | | | | | | | |
| 7 | 0,5 DYBP | 2,3 MSA | - | 150 | 50 | | |
| HPP-15 | 0,5 DYBP | 2,3 MSA | - | | 40 | 65 | 1,98 |
| 8 | 0,4 DYBP | 2,8 MSA | 4 MMA | 132 | 65 | 88 | 1,37 |
| HCP-18 | | | | | | | |

### Herstellung der erfindungsgemäßen PP/Naturstoff-Verbunde

In Tabelle 2 sind die unter Verwendung der erfindungsgemäßen Haftvermittler sowie der Vergleichs-Schmelzepfropf-Haftvermittler auf einem Doppelschneckenkneter DSK 25 der Firma Werner & Pfleiderer hergestellten PP/Naturstoff-Composites mit ihren wichtigen Kennwerten aufgeführt.

Folgende Verbund-Zusammensetzungen sind hergestellt und bezüglich ihrer mechanischen Kennwerte sowie Wasseraufnahme untersucht worden:

### A) PP-Matrixmaterial

die als PP-Rückgrat eingesetzten Polypropylene HPP-15 und HCP-18

### B) Cellulosehaltiger Naturrohstoff

- Holzmehl
- Holzgranulat (Lignocell P super, Hersteller- und Vertriebsfirma: Rettenmaier)
- Bambusfaserkonzentrat (vorverdichtet; Fasergehalt ca. 80 Masse-%)

### C) Haftvermittler

die in Tabelle 1 aufgeführten mittels Festphasenpfropfung hergestellten carboxylierten/maleinierten Polypropylene (Beispiele 1-8) und die zwei durch Schmelzepfropfung erhaltenen Vergleichs-Haftvermittler (Beispiele Vgl.1A und Vgl.6A)

### D) Additive

- Stabilisator: Irganox B 215 (Abkürzung: Irg.), Herstellerfirma: Ciba & Geigy
- Schlagzähkomponente 1: Ethylen/Octen-Copolymer mit 39 Masse-% Octeneinheiten, einer Dichte von 0,868 g/cm³ und einer Schmelzflussrate MFR (190 °C/2,16 kg) von 0,5 g/10 min (POE)
- Schlagzähkomponente 2: maleiniertes POE mit CSₑₓ=2,06 Masse-% und MFR (190 °C/21 kg)=5 g/10 min; Hersteller: Kometra (entsprechend Datenblatt für Scona^{®} TSPOE 1112 GBLL; s. auch Patentanmeldung DE 103 47 392.0, Anmelder: KOMETRA AG)

In Tabelle 2 sind für verschiedene PP/Holz- bzw. Bambus-Compounds die Zusammensetzungen der Verbunde und die für ihre weitere Verarbeitung (Extrusion, Spritzgießen) wichtigsten mechanischen Kennwerte aufgeführt:
Biege-E-Modul in N/mm² nach ISO 178
Biegefestigkeit in N/mm² nach ISO 178
Charpy-Schlagzähigkeit in kJ/m² nach ISO 179
Charpy-Kerbschlagzähigkeit in kJ/m² nach ISO 179/1eA
Zugfestigkeit in N/mm² nach ISO 527

**Tabelle 2**

| Nr. | Verbund-Zusammensetzung [Masse-%] | | | | Mechanische Kennwerte | | | | |
|---|---|---|---|---|---|---|---|---|---|
| | A) PP | B) Naturstoff | C) Haftvermittl. | D) Additiv | Biege-E-Mod. | Biegefestigk. | Schlagzähigk. | Kerbschlagz. | Zugfestigk. |
| 9 | 57 HPP-15 | 40 Holz Lignocell | 3 Vgl.1A | - | 2590 | 42,5 | 9,6 | 3,4 | 25,7 |
| 10 | 57 HPP-15 | 40 Holz Lignocell | 3 Bsp. 1 | - | 2900 | 58,2 | 12,9 | 3,5 | 44,2 |
| 11 | 47 HPP-15 | 50 Holz Lignocel | 3 Vgl.1A | - | 2830 | 51,5 | 9,0 | 3,1 | 37,0 |
| 12 | 48 HPP-15 | 50 Holz Lignocel | 2 Bsp. 3 | - | 2930 | 59,8 | 10,9 | 3,3 | 43,5 |
| 13 | 38 HPP-15 | 60 Holz Lignocell | 2 Bsp.3 | - | 4240 | 62,6 | 11,6 | 3,8 | 42,9 |
| 14 | 38 HPP-15 | 60 Holz Lignocell | 2 Vgl.1A | - | 4160 | 47,6 | 7,2 | 2,3 | 26,1 |
| 15 | 51 HPP-15 | 40 Holz Lignocell | 2 Bsp.3 | 7 POE | 1900 | 41,1 | 16,3 | 5,3 | 33,1 |
| 16 | 24 HPP-15 | 60 Holz Lignocell | 2 Bsp.3 | 14 POE | 1590 | 35,9 | 19,1 | 7,3 | 29,4 |
| 17 | 51 HPP-15 | 40 Holz Lignocell | 2 Bsp.4 | 7 TSPOE | 1950 | 42,5 | 20,3 | 7,6 | 34,9 |
| 18 | 51 HPP-15 | 40 Holz Lignocell | 2 Vgl.1A | 7 TSPOE | 1790 | 37,8 | 16,3 | 5,9 | 34,3 |
| 19 | 18 HPP-15 | 80 Holz-mehl | 2 Bsp.5 | - | 5300 | 50,7 | 6,1 | 2,2 | 29,3 |
| 20 | 38 HCP18 | 60 Holz-mehl | 3 Bsp.3 | - | 1760 | 38,5 | 6,6 | 5,1 | 31,3 |
| 21 | 18 HPP-15 | 80 Holz-mehl | 2 Bsp.7 | - | 5280 | 52,8 | 6,9 | 2,4 | 33,2 |
| 22 | 18 HPP-15 | 80 Holz-mehl | 2 Vgl.1A | - | 4750 | 46,5 | 5,3 | 1,8 | 28,5 |
| 23 | 69,8 HPP-15 | 30 Bam-bus | - | 0,2 lrg. | 2700 | 47,5 | 13,7 | 3,0 | 32,4 |
| 24 | 67,8 HPP-15 | 30 Bam-bus | 2 Bsp.6 | 0,2 Irg. | 2760 | 61,6 | 15,5 | 3,2 | 43,0 |
| 25 | 67,8 HPP-15 | 30 Bam-bus | 2 Vgl.6A | 0,2 Irg. | 2720 | 55,3 | 10,5 | 2,3 | 35,6 |
| 26 | 67,8 HCP-18 | 30 Bam-bus | 2 Bsp.2 | 0,2 Irg. | 2720 | 57,6 | 13,5 | 2,8 | 40,5 |
| 27 | 26 HCP-18 | 50 Holz-mehl | 3 Bsp.8 | 14 POE + 7 TSPOE | 1520 | 32,6 | 25.9 | 8,9 | 30,4 |

Eine weitere wichtige Eigenschaftsverbesserung, die aus der Verwendung der erfindungsgemäßen Haftvermittler resultiert, ist die verringerte Wasseraufnahme im Vergleich zu PP/Holz- oder Naturfaser-Verbunden, die keinen Haftvermittler oder einen mittels bekannter Schmelzepfropfmaleinierung hergestellten Haftvermittler enthalten. Bei den Wasseraufnahmeuntersuchungen ist ermittelt worden, dass mit Ansteigen des MSA-Pfropfgrades die absolute Wasseraufnahme absinkt. So werden für gespritzte ISO-Prüfkörper nach insgesamt vierwöchiger Wasserlagerung unter definierten Bedingungen bei Raumtemperatur z. B. für die in Tabelle 2 aufgeführten Beispiele 9 (mit 3 Masse-% Vgl.1A-Haftvermittler) und 10 (mit 3 Masse-% Bsp.-Nr.3-Haft-vermittler) folgende Wasseraufnahmen ermittelt (Tabelle 3):

**Tabelle 3**

| Verbund | Haftvermittler | Wasseraufnahme [Masse-%] | | | |
|---|---|---|---|---|---|
| (Nr. in Tab. 2) | [Masse-%] | nach 2 d | nach 8 d | nach 14 d | nach 28 d |
| Bspl.-Nr. 9 | 3 Ma.-% Vgl.1A | 0,81 | 1,58 | 1,87 | 2,10 |
| Bspl.-Nr. 10 | 3 Ma.% Bsp.1 | 0,70 | 1,24 | 1,44 | 1,55 |
| 60 PP/40 Holz Lignocell | ohne | 1,28 | 2,47 | 3,04 | 3,40 |

Die Ergebnisse zeigen, dass die mit den erfindungsgemäßen carboxylierten Polypropylenen ausgerüsteten PP/Naturstoff-Verbunde auf Grund der hohen Pfropfgrade der Haftvermittler entsprechend Carboxylierungs-/Maleinierungsgraden zwischen 1 und 2 Masse-% und gezielter Degradation der PP-Rückgrate entsprechend MFR (190 °C/2,16 kg) zwischen ca. 50 und ca. 120 g/10 min eine deutlich höhere Kompatibilität und damit ein höheres mechanisches Niveau sowie eine erhebliche Reduktion der Wasseraufnahme des PP/Naturstoff-Verbundes im Vergleich zu analogen mittels Schmelzepfropfung (reaktiver Extrusion) hergestellter maleinierter Polypropylene bewirken.
Die höhere Wirksamkeit der erfindungsgemäßen Haftvermittler äußert sich auch darin, dass gegenüber schmelze-maleinierten Polypropylenen geringere Konzentrationen an carboxyliertem/maleiniertem Polypropylen für eine bestimmte Kennwerterhöhung erforderlich sind, was ein nicht unerheblicher wirtschaftlicher Vorteil ist.

## Patentansprüche

1. Verbunde, bestehend aus
A) 8 bis 89,8 Masse-% Propylenhomo- oder -copolymerisat (PP),
B) 10 bis 91,8 Masse-% cellulosehaltigem Naturprodukt in partikulärer und/oder faseriger Form,
C) 0,2 bis 10 Masse-% Haftvermittler auf Basis eines carboxylierten Polypropylens und
D) 0 bis 40 Masse-% Additive aus der Reihe der Schlagzähmodifikatoren für PP, Stabilisatoren, Antioxydantien und anderer für die Verarbeitung sowie Anwendung üblicher Hilfsstoffe,
**dadurch gekennzeichnet, dass** als Haftvermittler C) ein durch Festphasenpfropfung von Propylenhomo- und/oder -copolymeren (PP) mit einer α,β-ungesättigten Mono- oder Dicarbonsäure und/oder deren Anhydrid (Carboxylmonomer) oder mit einer Carboxylmonomermischung oder mit einer mindestens ein Carboxylmonomer enthaltenden Monomermischung bei Reaktionstemperaturen zwischen 100 °C und der PP-Schmelztemperatur unter Aufrechterhaltung der fest-fluiden Konsistenz des Reaktionssystems und Verwendung eines freie Radikale bildenden peroxidischen Initiators hergestelltes carboxyliertes Polypropylen eingesetzt worden ist.

2. Verbunde nach Anspruch 1, wobei als Schlagzähmodifikator D)
ein Polyolefinelastomer aus der Reihe
- der Ethylen/C₃- bis C₈-Alkylen/(Dien)-Copolymere und/oder
- funktionalisierten Ethylen/C₃- bis C₈-Alkylen/(Dien)-Copolymere und/oder ein Elastomer aus der Reihe
- der Styrol-(hydrierte)Dien-Blockcopolymere und/oder
- funktionalisierten Styrol-(hydrierte)Dien-Blockcopolymere eingesetzt wird.

3. Verbunde nach Anspruch 2, wobei als Schlagzähmodifikator D) ein Ethylen/Octen-Copolymer oder ein maleiniertes Ethylen/Octen-Copolymer bzw. eine Mischung aus nicht funktionalisiertem und maleiniertem Ethylen/Octen-Copolymer eingesetzt wird.

## Claims

1. Composites comprising
A) 8 to 89.8% by weight of a propylene homopolymer or copolymer (PP),
B) 10 to 91.8% by weight of a cellulose-containing natural product of particular and/or fibrous form,
C) 0.2 to 10% by weight of a adhesion agent based on a carboxylated polypropylene, and
D) 0 to 40% by weight of an additive from a range of PP impact-resistant modifiers, stabilisers, antioxidants and other aids commonly used in processing and application,
**characterised in that** a carboxylated polypropylene has been used as adhesion agent C) prepared by solid state grafting propylene homopolymers and/or copolymers (PP) with an α,β-unsaturated monocarboxylic or dicarboxylic acid and/or their anhydrides (carboxylic monomer) or a carboxylic monomer mixture or a monomer mixture containing at least one carboxylic monomer and using a free radicals producing peroxide initiator at a reaction temperature between 100°C and the PP melt temperature, maintaining the reaction systems' solid-fluid consistency.

2. Composites according to claim 1 **characterised in that** a polyolefin elastomer from the range of
- the ethylene/C₃- to C₈-alkylene/(diene) copolymers and/or
- the functionalised ethylene/ C₃-to C₈-alkylene/(diene) copolymers and/or an elastomer from the range of
- the styrene (hydrogenated) diene block copolymers and/or
- the functionalised styrene (hydrogenated) diene block copolymers
is used as impact-resistant modifier D).

3. Composites according to claim 2 **characterised in that** an ethylene/octene co polymer or a maleated ethylene/octene copolymer, or a mixture of a non-functionalised and a maleated ethylene/octene copolymer is used as impact-resistant modifier D).

## Revendications

1. Liants polymériques constitués de
A) 8 à 89,8 % en poids d'homopolymère ou de copolymère de propylène (PP),
B) 10 à 91,8 % en poids de produit naturel contenant de la cellulose de forme de particules et/ou de fibres,
C) 0,2 à 10 % en poids d'agent adhésif à base d'un polypropylène carboxylé et
D) de 0 à 40 % en poids d'additifs de la série des modificateurs à résilience pour PP, stabilisateurs, antioxydants et d'autres agents auxiliaires employés habituellement pour la transformation,
**caractérisé par le fait que** fut utilisé comme agent adhésif C) un propylène carboxylé préparé par greffage en phase solide d'homopolymères et/ou de copolymères (PP) de propylène avec un acide monocarboxylique ou dicarboxylique α, β non saturé et/ou de leur anhydride (monomère carboxylique) ou avec un mélange de monomères carboxyliques ou avec un mélange de monomères contenant au moins un monomère carboxylique par des températures de réaction allant de 100 °C jusqu'au point de fusion du PP en maintenant la consistance solide et ruisselante du système de réaction et en utilisant un initiateur aux peroxydes formant des radicaux libres.

2. Liants polymériques selon la revendication 1, en utilisant comme modificateur à résilience D) un élastomère de polyoléfine de la série
- des copolymères d'éthylène/alkylène C₃- à C₈/(diène) et/ou
- des copolymères d'éthylène/alkylène C₃- à C₈/(diène) fonctionnalisés
et/ou un élastomère de la série
- des copolymères séquencés au styrène/diène (hydrogéné) et/ou
- des copolymères séquencés au styrène/diène (hydrogéné) fonctionnalisés.

3. Liants polymériques selon la revendication 2, en utilisant comme modificateur à résilience D) un copolymère d'éthylène/octène ou un copolymère d'éthylène/octène maléiné ou un mélange de copolymère d'éthylène/octène non fonctionnalisé ni maléiné.
